# EUROPÄISCHE PATENTSCHRIFT

(11) **EP 1 371 846 B1**
(45) Veröffentlichungstag und Bekanntmachung des Hinweises auf die Patenterteilung: **01.07.2020**
(21) Anmeldenummer: 03008602.9
(22) Anmeldetag: 31.03.2001
(51) Int. Cl.: H02P 9/42, H02P 9/04, H02J 3/40, H02J 3/38, F03D 9/25, F03D 7/02, F03D 17/00, F03D 7/04

(54) **Verfahren zum Betreiben einer Windenergieanlage sowie Windenergieanlage**
Wind energy plant and method for operating a wind energy plant
Installation à énergie éolienne et procédé d'utilisation

(30) Priorität: 11.05.2000 DE 10022974
(43) Veröffentlichungstag der Anmeldung: 17.12.2003
(62) Teilanmeldung aus: 01927846.4
(73) Patentinhaber: Wobben Properties GmbH, 26607 Aurich (DE)
(72) Erfinder: Wobben, Aloys, 26607 Aurich (DE)
(74) Vertreter: Eisenführ Speiser

(56) Entgegenhaltungen:
- DE-A- 19 756 777
- DE-C- 368 799
- DE-U- 29 621 449
- GB-A- 2 330 256
- US-A- 4 189 648
- HEIER: "Windkraftanlagen im Netzbetrieb" , TEUBNER , 1996 XP002259147 * Seite 310 - Seite 312 *
- HEIER: "Windkraftanlagen im Netzbetrieb" , TEUBNER , 1996 XP002259148 * Seite 312 - Seite 335 *
- LYONS J P ET AL: "THE CONTROL OF VARIABLE-SPEED WIND TURBINE GENERATORS" PROCEEDINGS OF THE IEEE CONFERENCE ON DECISION AND CONTROL,XX,XX, Bd. 3, 14. Dezember 1983 (1983-12-14), Seiten 1417-1421, XP000612992

## Beschreibung

Die vorliegende Erfindung betrifft ein Verfahren zum Betreiben einer Windenergieanlage mit einem von einem Rotor antreibbaren elektrischen Generator zum Abgeben elektrischer Leistung an ein elektrisches Netz, dem die Windenergieanlage angeschlossen ist. Die Erfindung betrifft ferner eine Windenergieanlage mit einem Rotor und einem mit dem Rotor gekoppelten elektrischen Generator zum Abgeben elektrischer Leistung an einen elektrischen Verbraucher, insbesondere ein elektrisches Netz.

Bei schwachen elektrischen (Insel-)Netzen steigt die Netzfrequenz sehr schnell (schlagartig) an, wenn ein größerer Verbraucher vom elektrischen Netz getrennt wird. Die Antriebsmaschinen, wie z. B. Dieselmotoren, Wasserräder usw. benötigen einige Zeit, um dann ihre (mechanische und elektrische) Leistung zu reduzieren. Während dieser Zeit erzeugen diese Generatoren mehr Energie als vom elektrischen Netz entnommen wird. Diese Energie wird dann für die Beschleunigung der Generatoren verbraucht. Damit steigt die Drehzahl und somit auch die Netzfrequenz an.

Da viele elektrische Geräte, z. B. Computer, Elektromotoren und dergleichen, die an das elektrische Netz angeschlossen sind, jedoch nicht auf schwankende Netzfrequenzen bzw. deren schlagartige Änderungen ausgelegt sind, kann dieses zu Schäden an elektrischen Maschinen bis zur Zerstörung dieser Maschinen führen.

Als Stand der Technik wird hingewiesen auf Heier "Windkraftanlagen im Netzbetrieb", Teubner, 1996, XP002259147, Hau, Erich "Windkraftanlagen", 2. Auflage, Springer-Verlag, 1996, Seiten 322-329 sowie DE 19756777 A.

Der Erfindung liegt die Aufgabe zu Grunde, die vorbeschriebenen Probleme zu beseitigen, wenn Windenergieanlagen an dem elektrischen Netz angeschlossen sind.

Erfindungsgemäß wird diese Aufgabe durch ein Verfahren mit den Merkmalen nach Anspruch 1 sowie eine Windenergieanlage mit dem Merkmal nach Anspruch 3 gelöst. Vorteilhafte Weiterbildungen sind in den Unteransprüchen beschrieben.

Erfindungsgemäß wird vorgeschlagen, falls Windenergieanlagen an solchen schwachen Netzen betrieben werden, deren (mechanische und) elektrische Leistung in Abhängigkeit der steigenden Netzfrequenz zu steuern. Damit soll ein weiterer Anstieg der Netzfrequenz verhindert werden bzw. eine Reduktion der Netzfrequenz erreicht werden.

Die Erfindung ist nachfolgend an Hand eines Ausführungsbeispiels näher erläutert:

Es zeigen:
- Fig. 1: ein Frequenz-/Leistungszeitdiagramm einer Windenergieanlage,
- Fig. 2: Seitenansicht einer Windenergieanlage,
- Fig. 3: ein Blockschaltdiagramm eines mit einem Mikroprozessor gesteuerten Wechselrichters einer Windenergieanlage,
- Fig. 4: Darstellung einer Regelungseinrichtung einer Windkraftanlage,
- Fig. 5: Darstellung einer Ankopplung einer Windenergieanlage an ein elektrisches Netz,
- Fig. 6: Alternativdarstellung zu Fig. 3.

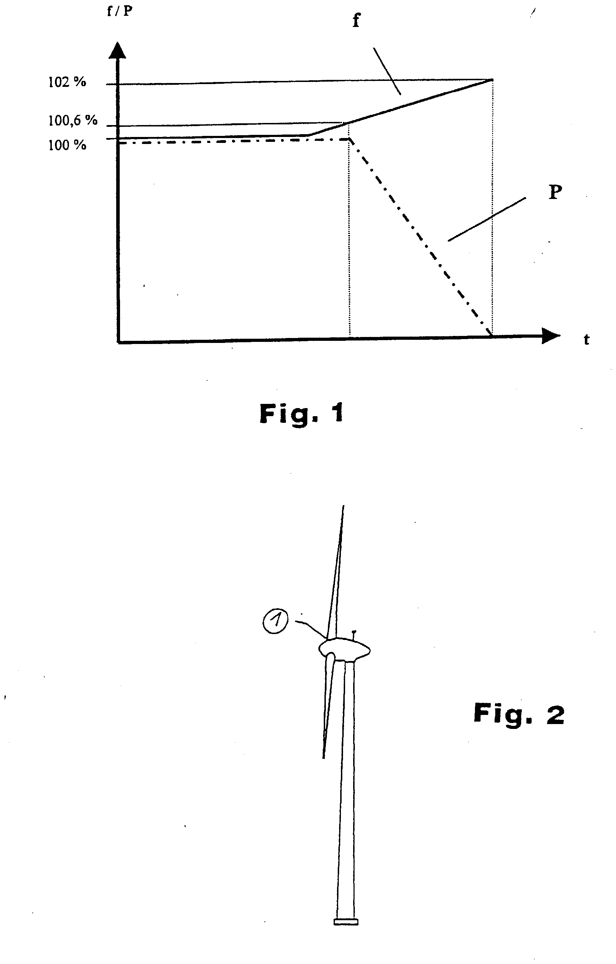

Fig. 1 zeigt die Anforderung an eine Windenergieanlage, ihre Ausgangsleistung P in Abhängigkeit der elektrischen Frequenz f des Netzes zu reduzieren. Der Wert von 100 % stellt dabei die Sollfrequenz (50 Hz, 60 Hz) des elektrischen Netzes dar. Die Werte 100,6 % bzw. 102 % sind entsprechend höhere Werte der Netzfrequenz f.

Die elektrische Leistung der Windenergieanlage wird z.B. bei einem Anstieg der Netzfrequenz um 0,6 % (also auf 100,6 %) noch nicht heruntergeregelt. Steigt danach die Netzfrequenz noch weiter an, wird die elektrische Leistung der Windenergieanlage heruntergeregelt. Im gezeigten Beispiel wird die elektrische Leistung der Windenergieanlage bei einem Anstieg der Netzfrequenz auf 102 % auf Null Leistung heruntergeregelt.

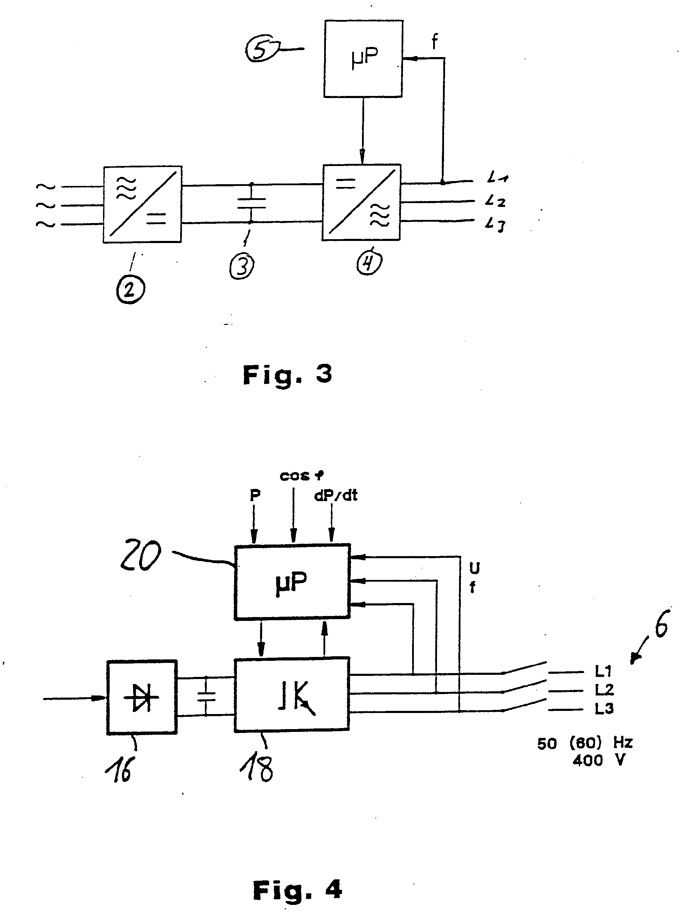

Fig. 3 zeigt ein Ausführungsbeispiel einer Windenergieanlage, die dieser Anforderung gerecht wird. Die Windenergieanlage hat verstellbare Rotorblätter (Pitch-Regelung der Rotorblätter), damit die mechanische Leistung der Windenergieanlage abgeregelt werden kann. Wird beispielsweise der Anstellwinkel der Rotorblätter zum Wind verstellt, kann auch die Kraft auf die Rotorblätter auf einen gewünschten Wert verringert werden. Der elektrische Wechselstrom des Generators (nicht dargestellt), welcher mit dem Rotor, der die Rotorblätter trägt, verbunden ist, wird mittels eines Gleichrichters 2 gleichgerichtet und mittels eines Kondensators 3 geglättet. Der Wechselrichter 4 formt die Gleichspannung dann in einen Wechselstrom um, der an das Netz L₁, L₂, L₃ abgegeben wird. Die Frequenz dieses Ausgangsstromes wird vom Netz vorgegeben. Die Regelungseinrichtung 5, bestehend aus einem Mikroprozessor, misst die Netzfrequenz und steuert die Leistungsschalter des Wechselrichters derart, dass die Ausgangsfrequenz der Netzspannung (Netzfrequenz) entspricht. Steigt die Netzfrequenz - wie oben beschrieben - an, wird die elektrische Leistung - wie in Fig. 1 dargestellt - heruntergeregelt.

Fig. 4 veranschaulicht die erfindungsgemäße Regelungseinrichtung. Der schematisch dargestellte Rotor 4 der Windenergieanlage ist mit einem Generator G gekoppelt, der eine elektrische Leistung bereitstellt, die von der Windgeschwindigkeit und somit der Windleistung abhängt. Die von dem Generator G erzeugte Wechselspannung wird mittels des Wechselrichters zunächst gleichgerichtet und anschließend in eine Wechselspannung umgewandelt, die eine der Netzfrequenz entsprechende Frequenz aufweist. Mit Hilfe des Netzfrequenzaufnehmers wird die Netzspannung am Netzeinspeisungspunkt des Netzes ermittelt. Sobald die Netzfrequenz einen vorbestimmten Wert - siehe Fig. 1 - übersteigt, wird die elektrische abgegebene Leistung reduziert, um einem weiteren Ansteigen der Netzfrequenz entgegenzuwirken. Mit Hilfe der Regelungseinrichtung wird mithin die Netzfrequenz des Netzes auf einen gewünschten Netzfrequenzwert eingeregelt, zumindest wird ihr weiterer Anstieg vermieden.

Durch eine derartig geregelte Einspeisung der von der Windenergieanlage abgegebenen Leistung können Netzfrequenzschwankungen vermieden bzw. erheblich reduziert werden.

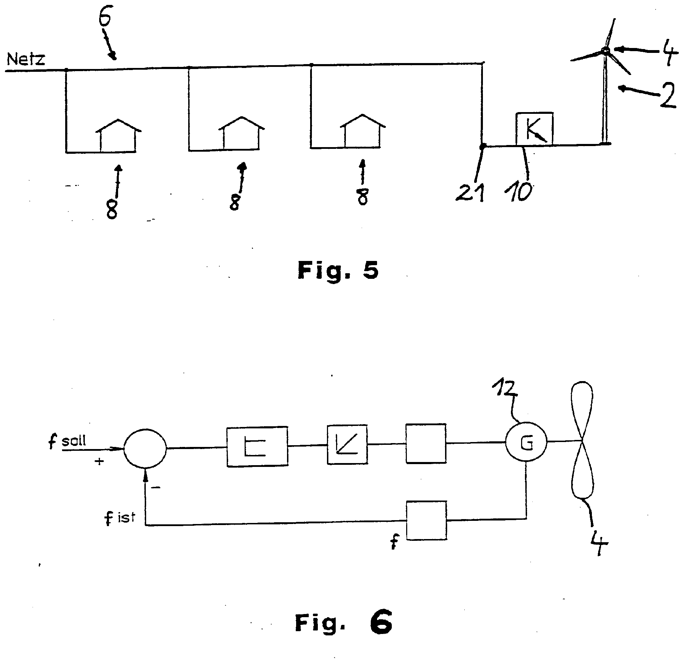

Fig. 5 zeigt die Ankopplung einer Windenergieanlage an ein elektrisches Netz, wobei die von der Windenergieanlage erzeugte elektrische Leistung am Netzeinspeisungspunkt in das Netz abgegeben wird. Am elektrischen Netz hängen mehrere Verbraucher, im dargestellten Beispiel als Häuser skizziert.

Fig. 6 zeigt wesentliche Bestandteile der Steuer-Regelungseinrichtung in etwas anderer Darstellung als in Fig. 3. Die Steuer- und Regelungsanordnung weist einen Gleichrichter auf, in dem die in dem Generator erzeugte Wechselspannung gleichgerichtet wird. Ein mit dem Gleichrichter verbundener Frequenzumrichter wandelt die zunächst im Zwischenkreis gleichgerichtete Gleichspannung in eine Wechselspannung um, die als dreiphasige Wechselspannung über die Leitung L₁, L₂ und L₃ in das Netz eingespeist wird. Der Frequenzumrichter wird mit Hilfe des Mikrocomputers, der Teil der gesamten Regelungseinrichtung ist, gesteuert. Hierzu ist der Mikroprozessor mit dem Frequenzumrichter gekoppelt. Als Eingangsgrößen für die Regelung der Spannung, mit der die von der Windenergieanlage 2 zur Verfügung gestellten elektrischen Leistung in das Netz eingespeist wird, sind die aktuelle Netzspannung, die Netzfrequenz f, die elektrische Leistung P des Generators, der Blindleistungsfaktor cos _ sowie der Leistungsgradient dP/dt verwendet. In dem Mikroprozessor wird die erfindungsgemäße Regelung der einzuspeisenden Spannung mit ihrer gewünschten Netzfrequenz verwirklicht.

## Patentansprüche

1. Verfahren zum Betreiben einer Windenergieanlage mit einem Generator zum Abgeben elektrischer Leistung an ein elektrisches Netz, wobei die Windenergieanlage einen mit dem Generator gekoppelten Rotor mit Rotorblättern mit Pitchregelung aufweist, **dadurch gekennzeichnet, dass** die von dem Generator an das Netz abgegebene Leistung in Abhängigkeit der Netzfrequenz des elektrischen Netzes geregelt bzw. eingestellt wird und dass die in das Netz eingespeiste Leistung verringert wird, wenn die Netzfrequenz einen vorbestimmten Wert übersteigt, um einem weiteren Anstieg der Netzfrequenz entgegenzuwirken und wobei die Leistung der Windenergieanlage durch Verstellen der Rotorblätter mittels Pitchregelung reduziert wird.

2. Verfahren zum Betreiben einer Windenergieanlage nach Anspruch 1, **dadurch gekennzeichnet, dass** ab Erreichen des vorbestimmten Wertes, ab dem die in das Netz eingespeiste Leistung verringert wird, die elektrische Leistung bei weiter steigender Netzfrequenz weiter reduziert wird.

3. Windenergieanlage mit einem Rotor und einem mit dem Rotor gekoppelten elektrischen Generator zum Abgeben elektrischer Leistung an ein elektrisches Netz, wobei der Rotor Rotorblätter mit einer Pitchregelung aufweist, **dadurch gekennzeichnet, dass** die von dem Generator an das Netz abgegebene Leistung in Abhängigkeit der Netzfrequenz des elektrischen Netzes geregelt bzw. eingestellt wird und dass die in das Netz eingespeiste Leistung verringert wird, wenn die Netzfrequenz einen vorbestimmten Wert übersteigt, um einem weiteren Anstieg der Netzfrequenz entgegenzuwirken und wobei die Leistung der Windenergieanlage durch Verstellen der Rotorblätter mittels Pitchregelung reduziert wird.

4. Windenergieanlage nach Anspruch 3, **dadurch gekennzeichnet, dass** die Windenergieanlage eine Regelungseinrichtung mit einem Frequenzaufnehmer zum Messen der Frequenz der am Netz anliegenden elektrischen Spannung aufweist und die Regelungseinrichtung einen Mikroprozessor aufweist und die Windenergieanlage einen Wechselrichter aufweist, der mit dem Mikroprozessor gekoppelt ist.

5. Windenergieanlage nach einem der vorhergehenden Ansprüche, **dadurch gekennzeichnet, dass** die Windenergieanlage keine elektrische Leistung an das Netz abgibt, wenn die Netzfrequenz einen vorbestimmten Wert ihres Sollwertes, vorzugsweise 2% ihres Sollwerts, übersteigt.

## Claims

1. Method of operating a wind power installation having a generator for delivering electrical power to an electrical network, wherein the wind power installation has a generator which is coupled to a rotor having rotor blades having pitch control, **characterized in that** the power delivered by the generator to the network is regulated or adjusted as a function of the network frequency of the electrical network, and **in that** the power delivered to the network is reduced, if the network frequency exceeds a predetermined value, in order to prevent a further increase of the network frequency, and wherein the power of the wind power installation is reduced by adjusting the rotor blades using pitch control.

2. Method of operating a wind power installation according to claim 1, **characterized in that**, from the point when the predetermined value is reached at which the power delivered into the network is reduced, the electrical power is further reduced as the network frequency continues to rise.

3. Wind power installation having a rotor and a generator coupled to the rotor for delivering electrical power to an electrical network, wherein the rotor comprises rotor blades having a pitch regulation, **characterized in that** the power delivered by the generator to the network is regulated or adjusted as a function of the network frequency of the electrical network, and **in that** the power delivered to the network is reduced, if the network frequency exceeds a predetermined value, in order to prevent a further increase of the network frequency, and wherein the power of the wind power installation is reduced by adjusting the rotor blades using pitch control.

4. Wind power installation according to claim 3, **characterised in that** the wind power installation comprises a regulating device having a frequency pick-up for measuring the frequency of the electrical voltage of the network, and the regulating device comprises a microprocessor, and the wind power installation comprises an inverter which is connected to the microprocessor.

5. Wind power installation according to any of the preceding claims, **characterized in that** the wind power installation does not deliver any electrical power to the network if the network frequency exceeds a predetermined value of its reference value, preferably 2% of its reference value.

## Revendications

1. Procédé pour faire fonctionner une éolienne avec un générateur pour fournir une puissance électrique à un réseau électrique, dans lequel l'éolienne présente un rotor couplé au générateur, avec des pales de rotor avec régulation du pas, **caractérisé en ce que** la puissance fournie par le générateur au réseau est régulée ou réglée en fonction de la fréquence de réseau du réseau électrique, et que la puissance injectée dans le réseau est réduite quand la fréquence de réseau dépasse une valeur prédéfinie pour contrecarrer une hausse supplémentaire de la fréquence de réseau et dans lequel la puissance de l'éolienne est réduite par l'ajustement des pales de rotor au moyen d'une régulation du pas.

2. Procédé pour faire fonctionner une éolienne selon la revendication 1, **caractérisé en ce que** dès que la valeur prédéfinie, à partir de laquelle la puissance injectée dans le réseau est réduite, est atteinte, la puissance électrique est davantage réduite quand la fréquence de réseau augmente davantage.

3. Éolienne avec un rotor et un générateur électrique couplé au rotor, pour fournir une puissance électrique à un réseau électrique, dans laquelle le rotor présente des pales de rotor avec une régulation du pas, **caractérisée en ce que** la puissance fournie par le générateur au réseau est régulée ou réglée en fonction de la fréquence de réseau du réseau électrique, et que la puissance injectée dans le réseau est réduite quand la fréquence de réseau dépasse une valeur prédéfinie pour contrecarrer une hausse supplémentaire de la fréquence de réseau et dans laquelle la puissance de l'éolienne est réduite par l'ajustement des pales de rotor au moyen d'une régulation du pas.

4. Éolienne selon la revendication 3, **caractérisée en ce que** l'éolienne présente un dispositif de régulation avec un enregistreur de fréquence pour mesurer la fréquence de la tension électrique appliquée sur le réseau et le dispositif de régulation présente un microprocesseur et l'éolienne présente un onduleur, qui est couplé au microprocesseur.

5. Éolienne selon l'une quelconque des revendications précédentes, **caractérisée en ce que** l'éolienne ne fournit aucune puissance électrique au réseau quand la fréquence de réseau dépasse une valeur prédéfinie de sa valeur théorique, de préférence de 2 % de sa valeur théorique.
